# DEMANDE DE BREVET EUROPEEN

(11) **EP 1 048 516 A1**
(43) Date de publication de la demande: **02.11.2000**
(21) Numéro de dépôt: 00401173.0
(22) Date de dépôt: 27.04.2000
(51) Int. Cl.: B60N 2/46

(54) **Console à réceptacle obturable pour habitacle de véhicule automobile**

(30) Priorité: 28.04.1999 FR 9905387
(71) Demandeur: ECIA INDUSTRIE, 92100 Boulogne (FR)
(72) Inventeur: Bannier, Christine, 25200 Montbeliard (FR); Bonnot, David, 25700 Valentigney (FR)
(74) Mandataire: Jacobson, Claude

(57) **Abrégé**

La console s'étend longitudinalement à proximité d'au moins un siège du véhicule et comporte un corps (14), délimitant un réceptacle (18), et un accoudoir (16) pour un occupant du siège muni d'une embase (20) articulée autour d'un premier axe (Y1) lié au corps (14) de façon à former un couvercle déplaçable entre une position d'obturation du réceptacle (18) et une position d'accès à ce réceptacle (18). L'embase (20) porte un organe d'appui (22) du coude de l'occupant. Cet organe d'appui (22) est articulé autour d'un second axe (Y2) lié à l'embase (20), distinct du premier axe (Y1), de façon à permettre le déplacement de l'embase (20) autour du premier axe (Y1), indépendamment de la position de l'organe d'appui (22) par rapport à l'embase (20). Des moyens (24) permettent de régler en hauteur l'organe d'appui (22) par rapport à l'embase (20) par rotation de cet organe d'appui (22) autour du second axe (Y2).

## Description

La présente invention concerne une console à réceptacle obturable pour habitacle de véhicule automobile.

On connaît déjà dans l'état de la technique une console pour habitacle de véhicule automobile, du type s'étendant longitudinalement à proximité d'au moins un siège du véhicule et comprenant un corps délimitant un réceptacle, et un accoudoir pour un occupant du siège muni d'une embase articulée autour d'un premier axe lié au corps de façon à former un couvercle déplaçable entre une position d'obturation du réceptacle et une position d'accès à ce réceptacle, cette embase portant un organe d'appui du coude de l'occupant.

Dans une console de ce type, la hauteur de l'organe d'appui n'est généralement pas réglable.

L'invention a pour but de proposer une console du type précité, dans laquelle la hauteur de l'organe d'appui peut être réglée de façon à adapter l'accoudoir à différentes morphologies d'utilisateurs.

A cet effet, l'invention a pour objet une console du type précité, caractérisée en ce que l'organe d'appui est articulé autour d'un second axe lié à l'embase, distinct du premier axe, de façon à permettre le déplacement de l'embase autour du premier axe indépendamment de la position de l'organe d'appui par rapport à l'embase.

Suivant d'autres caractéristiques de cette console :
- elle comprend des moyens de réglage en hauteur de l'organe d'appui par rapport à l'embase par rotation de cet organe d'appui autour du second axe ;
- les deux axes sont sensiblement transversaux à la console ;
- l'embase comporte une première extrémité articulée autour du premier axe et une seconde extrémité à laquelle est lié le second axe, la première extrémité de l'embase s'étendant en arrière de la seconde extrémité de cette embase, ceci en considérant les orientations habituelles d'un occupant du siège ;
- l'embase porte deux organes d'appui articulés autour du même second axe ;
- elle comprend des moyens de réglage associés à chaque organe d'appui de façon à permettre des réglages en hauteur indépendants de ces organes d'appui.

L'invention a également pour objet un véhicule automobile caractérisé en ce qu'il est muni d'une console telle que définie ci-dessus.

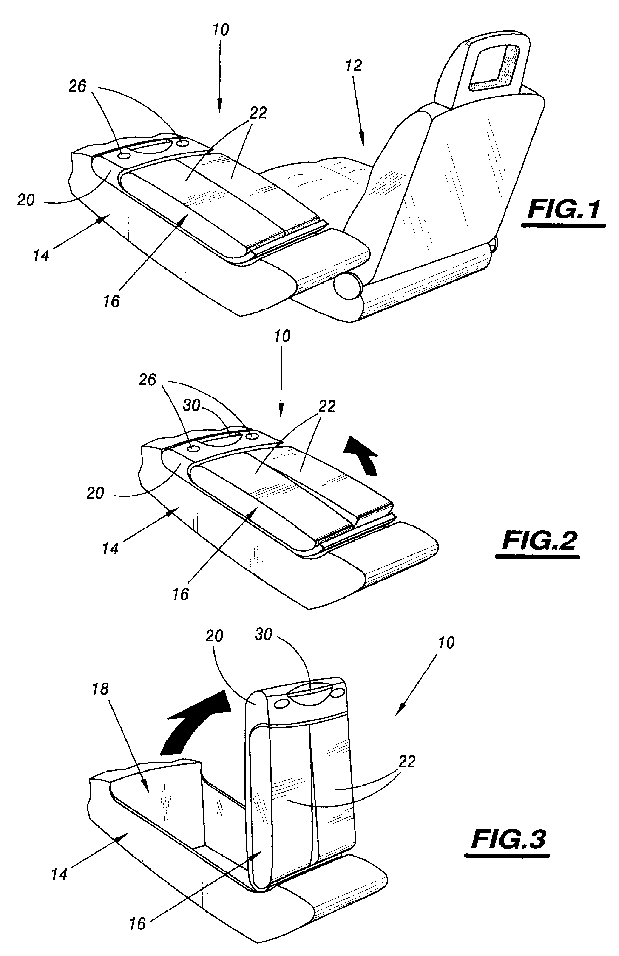

L'invention sera mieux comprise à la lecture de la description qui va suivre donnée uniquement à titre d'exemple et faite en se référant aux dessins dans lesquels les figures 1 à 6 sont des vues de la console selon l'invention dans différentes configurations de cette dernière, les figures 1 à 3 étant des vues en perspective et les figures 3 à 6 étant des vues schématiques correspondantes, en coupe longitudinale, de la console représentée sur les figures 3 à 6.

On a représenté sur les figures 1 à 6 une console 10 selon l'invention pour un habitacle de véhicule automobile. Dans ce qui suit, les orientations avant, arrière, gauche et droite sont considérées par rapport aux orientations habituelles d'un conducteur du véhicule.

La console 10 s'étend longitudinalement entre deux sièges avant 12 du véhicule dont seul le siège droit est représenté sur la figure 1.

La console 10 comprend un corps 14 portant un accoudoir 16 pour les occupants des sièges 12. Cet accoudoir 16 forme un couvercle d'obturation d'un réceptacle 18 délimité par le corps 14 de la console.

L'accoudoir 16 comporte une embase 20 et au moins un organe 22 d'appui du coude d'un occupant d'un des sièges avant 12. Dans l'exemple illustré, l'accoudoir 16 comporte deux organes d'appui 22 gauche et droit, s'étendant sensiblement longitudinalement, affectés respectivement aux occupants des sièges avant gauche et droit.

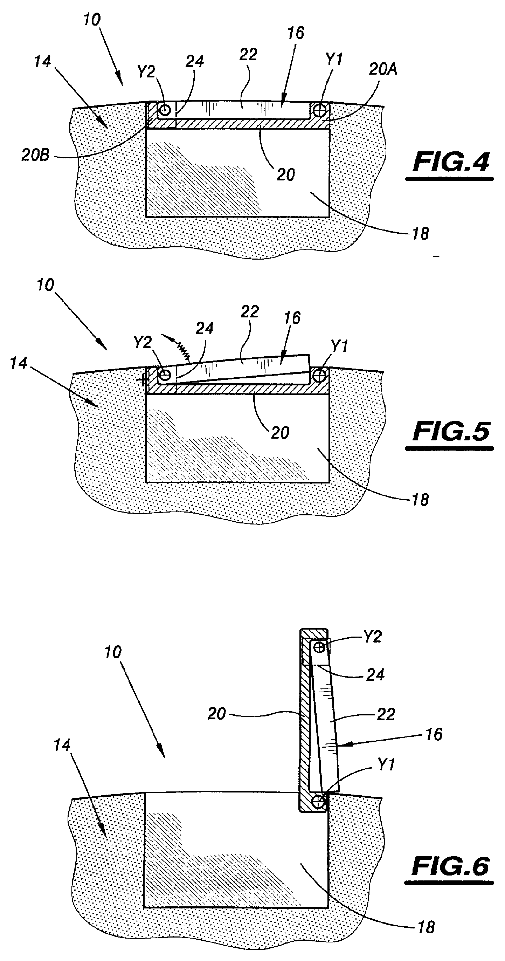

L'embase 20 comporte une extrémité arrière 20A articulée autour d'un axe arrière Y1, sensiblement transversal à la console 10, lié au corps 14, de façon à permettre le déplacement de l'accoudoir entre une position de fermeture du réceptacle 18, telle que représentée sur les figures 1 et 4, et une position d'ouverture de ce réceptacle 18, telle que représentée sur les figures 3 et 6.

Les deux organes d'appui 22 sont articulés autour d'un axe avant Y2, sensiblement transversal à la console 10, lié à une extrémité avant 20B de l'embase 20.

Les axes arrière Y1 et avant Y2 sont distincts. L'embase 20 peut se déplacer autour de l'axe arrière Y1 indépendamment de la position des organes d'appui 22 par rapport à l'embase 20.

Chaque organe d'appui 22 est réglable en hauteur par rotation autour de l'axe avant Y2 entre une position abaissée, telle que représentée sur les figures 1 et 4, et une position soulevée, telle que représentée sur les figures 2 et 5. Ce réglage en hauteur est réalisé à l'aide de moyens classiques 24, schématisés en traits mixtes sur les figures 4 à 6, associés à chaque organe d'appui 22. Ces organes d'appui 22 sont donc réglables en hauteur indépendamment l'un de l'autre. Les moyens de réglage 24 sont notamment de type mécanique ou électrique, continu ou discontinu.

Les moyens de réglage sont commandés par exemple par deux boutons 26, affectés respectivement aux deux organes d'appui 22, agencés par exemple dans l'extrémité avant de l'embase 20.

On décrira ci-dessous les principaux aspects du fonctionnement de l'accoudoir 16 de la console selon l'invention.

Initialement, l'accoudoir 16 est dans une position sensiblement horizontale d'obturation du réceptacle 18, telle que représentée sur les figures 1 et 4. Les deux organes d'appui 22 sont dans leur position abaissée sensiblement horizontale. L'utilisateur, assis par exemple sur le siège avant droit 12 illustré sur la figure 1, peut appuyer son coude sur l'organe d'appui droit 22 de l'accoudoir.

Lorsque l'utilisateur souhaite relever l'organe d'appui droit 22, il actionne le bouton 26 correspondant. Ceci provoque notamment le déverrouillage des moyens de réglage 24 et le soulèvement de l'organe d'appui droit 22 sous l'effet de la force élastique de rappel d'un ressort 28 à effet angulaire schématisé sur la figure 5.

L'utilisateur contrôle le soulèvement de l'organe d'appui 22 en exerçant une pression sur ce dernier, à l'encontre de la force de rappel du ressort 28, à l'aide de son coude ou de son bras.

Lorsque la hauteur souhaitée de l'organe d'appui droit 22 est atteinte, l'utilisateur relâche le bouton 26 ce qui a pour effet de verrouiller cet organe d'appui dans sa position soulevée telle que représentée sur les figures 2 et 5.

Si l'utilisateur souhaite accéder au réceptacle 18, il soulève l'embase 20, par exemple en saisissant une poignée 30 agencée sur l'extrémité avant de cette embase 20, de manière à faire pivoter l'ensemble de l'accoudoir 16 autour de l'axe arrière Yl, vers l'arrière de la console, jusqu'à atteindre la position sensiblement verticale de cet accoudoir 16 représentée sur les figures 3 et 6. Le réceptacle 18 est alors accessible. L'ouverture de l'accoudoir 16 formant couvercle est possible quelque soit le réglage en hauteur des organes d'appui 22, ce réglage n'étant pas modifié par les manoeuvres d'ouverture et de fermeture de l'embase 20.

L'invention ne se limite pas au mode de réalisation décrit précédemment.

En particulier, dans l'exemple décrit, l'accoudoir 16 comporte une embase rotative 20 commune aux deux organes d'appui 22. Toutefois, la console selon l'invention peut comporter en variante une embase rotative associée à chaque organe d'appui, de façon à former un demi couvercle d'obturation du réceptacle.

L'embase peut être articulée autour d'un axe transversal à la console, comme dans l'exemple décrit, ou sensiblement parallèle à la direction longitudinale de cette console.

Par ailleurs, la console selon l'invention peut être agencée à divers endroits dans l'habitacle d'un véhicule, en particulier entre les deux sièges avant de ce véhicule de manière à prolonger une partie centrale de planche de bord, comme dans l'exemple décrit, mais également entre deux assises d'une banquette arrière du véhicule ou dans une portière de ce véhicule.

Parmi les avantages de l'invention, on notera notamment les suivants.

Le réglage en hauteur de chaque organe d'appui par rotation autour de l'axe transversal avant de la console est ergonomique car il permet de conserver la continuité entre cet organe d'appui et la partie de la console située devant cet organe d'appui où sont généralement agencés, par exemple, dans le cas d'une console disposée entre deux sièges avant, un levier de changement de vitesses ou un levier de frein à main et, dans le cas d'une console disposée dans une portière, des boutons de commande de lève-vitre.

La console selon l'invention est munie d'au moins un organe d'appui réglable en hauteur de façon à adapter l'accoudoir à différentes morphologies d'utilisateurs, le réglage en hauteur de l'organe d'appui étant conservé après ouverture et fermeture de l'accoudoir formant couvercle pour le réceptacle de la console.

## Revendications

1. Console pour habitacle de véhicule automobile, du type s'étendant longitudinalement à proximité d'au moins un siège (12) du véhicule et comprenant un corps (14) délimitant un réceptacle (18), et un accoudoir (16) pour un occupant du siège muni d'une embase (20) articulée autour d'un premier axe (Y1) lié au corps (14) de façon à former un couvercle déplaçable entre une position d'obturation du réceptacle (18) et une position d'accès à ce réceptacle (18), cette embase (20) portant un organe d'appui (22) du coude de l'occupant, **caractérisée en ce que** l'organe d'appui (22) est articulé autour d'un second axe (Y2) lié à l'embase (20), distinct du premier axe (Y1), de façon à permettre le déplacement de l'embase (20) autour du premier axe (Y1) indépendamment de la position de l'organe d'appui (22) par rapport à l'embase (20).

2. Console selon la revendication 1, **caractérisée en ce qu'**elle comprend des moyens (24) de réglage en hauteur de l'organe d'appui (22) par rapport à l'embase (20) par rotation de cet organe d'appui (22) autour du second axe (Y2).

3. Console selon la revendication 1 ou 2, **caractérisée en ce que** les deux axes (Y1, Y2) sont sensiblement transversaux à la console (10).

4. Console selon la revendication 3, **caractérisée en ce que** l'embase (20) comporte une première extrémité (20A) articulée autour du premier axe (Y1) et une seconde extrémité (20B) à laquelle est lié le second axe (Y2), la première extrémité (20A) de l'embase s'étendant en arrière de la seconde extrémité (20B) de cette embase, ceci en considérant les orientations habituelles d'un occupant du siège (12).

5. Console selon l'une quelconque des revendications précédentes, **caractérisée en ce que** l'embase (20) porte deux organes d'appui (22) articulés autour du même second axe (Y2).

6. Console selon les revendications 2 et 5 prises ensemble, **caractérisée en ce qu'**elle comprend des moyens de réglage (24) associés à chaque organe d'appui (22) de façon à permettre des réglages en hauteur indépendants de ces organes d'appui (22).

7. Véhicule automobile, **caractérisé en ce qu'**il comprend une console (10) selon l'une quelconque des revendications précédentes.
